(19) Europäisches Patentamt
European Patent Office
Office européen des brevets

(11) **EP 2 457 950 B1**

(12) **EUROPEAN PATENT SPECIFICATION**

(45) Date of publication and mention
of the grant of the patent:
**18.09.2013  Bulletin 2013/38**

(51) Int Cl.:
**C08L 33/00** [(2006.01)]   **C08L 33/02** [(2006.01)]
**C08L 33/04** [(2006.01)]

(21) Application number: **11190102.1**

(22) Date of filing: **22.11.2011**

(54) **Composition de résine méthacrylic pour element de véhicule**

Methacrylharzzusammensetzung für ein Fahrzeugelement

Compositions de résine méthacrylique pour élément de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2010  JP 2010262278**

(43) Date of publication of application:
**30.05.2012  Bulletin 2012/22**

(73) Proprietor: **Sumitomo Chemical Company,
Limited
Tokyo 104-8260 (JP)**

(72) Inventors:
• **Wake, Takao**
**Niihama-shi, Ehime 792-8521 (JP)**
• **Yamazaki, Kazuhiro**
**Niihama-shi, Ehime 792-8521 (JP)**

(74) Representative: **Vossius & Partner
Siebertstrasse 4
81675 München (DE)**

(56) References cited:
**EP-A2- 1 223 195     WO-A1-2006/114576**

**Description**

BACKGROUND OF THE INVENTION

Field of the Invention

The present invention relates to a methacrylic resin composition for a vehicle member.

Description of Related Art

Since methacrylic resin composition is superior in transparency, weatherability and so on, they have been used as a molding material for a vehicle member such as a rear lamp cover, a head lamp cover, a visor and a meter panel (see, for example, JP 08-302145 A). Such a vehicle member is generally prepared by injection molding.

Recently, there is demand for a thin thickness vehicle member to attain a lighter vehicle member. However, a conventional methacrylic resin composition used as a molding material for a vehicle member does not have enough flowability on its molding. Thus, when the methacrylic resin composition is subjected to injection molding, it is hard to fully and uniformly fill a metal mold of an injection molding machine, and thereby it is difficult to mold the methacrylic resin composition into a thin thickness vehicle member.

Further, a vehicle member is required to have good mechanical strength, heat resistance and chemical resistance. However, when a methacrylic resin composition of high flowability is subjected to injection molding so as to prepare a thin thickness vehicle member, there arise problems such as that thus obtained vehicle member shows low mechanical strength and heat resistance, and/or shows low chemical resistance, for example, in a case of using a cleaning agent for car wash, a windshield washer fluid, a wax remover, or the like, chemicals contained therein bring about craze on a surface of the vehicle member.

As solutions for solving such problems, there are proposed a method by adding a transition metal salt and phosphite to a methacrylic resin composition (see, for example, JP 2003-105158 A), a method by adding a polymer processing auxiliary (see, for example, JP 11-140265 A), a method by blending two acrylic resin components having different molecular weights and compositions (see, for example, JP 2003-292714 A and JP 2006-193647 A), a method by adding styrene as a copolymerizable component (see, for example JP 2004-139839 A) and so on.

SUMMARY OF THE INVENTION

Technical Problem

Under present circumstances, however, the methacrylic resin composition obtained by these methods can not attain sufficient flowability, and it has been difficult to mold the methacrylic resin composition into a thin thickness vehicle member. Further, it is not satisfactory in terms of its mechanical strength, heat resistance and chemical resistance.

Thus, the purpose of the present invention is to provide a methacrylic resin composition for a vehicle member, which composition shows high flowability on molding, has good mechanical strength and heat resistance, and is superior in chemical resistance.

Solution to Problem

The inventors have considered earnestly in order to solve the above problems. As a result, the inventors have found a solution of the following constitution, and finally completed the present invention.

[1] A methacrylic resin composition for a vehicle member, characterized by

(I) comprising a copolymer polymerized from monomeric components comprising methyl methacrylate and acrylic acid ester wherein a content ratio of methyl methacrylate is at least 97% by weight,
(II) showing a reduced viscosity of 55 to 65 cm$^3$/g at 25°C measured in a form of a chloroform solution at a concentration of 0.01 g/cm$^3$,
(III) showing a melt flow rate (MFR) of at least 3 g/10 min at 230°C measured under a load of 37.3 N, and
(IV) showing a molecular weight distribution (Mw/Mn) of 2.2 to 3.8 calculated from a weight average molecular weight (Mw) and a number average molecular weight (Mn) both measured by gel permeation chromatography (GPC).

[2] The methacrylic resin composition for a vehicle member according to the above [1], wherein a content ratio of acrylic acid ester in the monomeric components is at least 0.1% by weight.

[3] The methacrylic resin composition for a vehicle member according to the above [1] or [2], wherein the monomeric components comprise 0.02 to 0.3 parts by weight of a polyfunctional monomer having at least two radical-polymerizable double bonds, on the basis of 100 parts by weight in total of methyl methacrylate and acrylic acid ester.

[4] The methacrylic resin composition for a vehicle member according to any of the above [1] to [3], wherein polymerization of the monomeric components is conducted by bulk polymerization.

[5] The methacrylic resin composition for a vehicle member according to any one of the above [1] to [4], which is to be subjected to injection molding.

[6] A vehicle member which is obtained by subjecting the methacrylic resin composition according to any one of the above [1] to [5] to injection molding.

[7] The vehicle member according to the above [6], which is at least one selected from a group consisting of a rear lamp cover, a head lamp cover, a visor and a meter panel.

Advantageous Effects of Invention

According to the present invention, it is able to provide a methacrylic resin composition suitable for preparing a vehicle member therefrom, which composition shows high flowability on molding and thereby can be readily molded into a thin thickness vehicle ember, has good mechanical strength and heat resistance, and is superior in chemical resistance.

DETAILED DESCRIPTION OF THE EMBODIMENTS

A methacrylic resin composition for a vehicle member (hereinafter, which is also referred to as a "methacrylic resin composition") of the present invention satisfies the following (I) to (IV) of

(I) comprising a copolymer polymerized from monomeric components comprising methyl methacrylate and acrylic acid ester wherein a content ratio of methyl methacrylate is at least 97% by weight,

(II) showing a reduced viscosity of 55 to 65 $cm^3/g$ at 25°C measured in a form of a chloroform solution at a concentration of 0.01 $g/cm^3$,

(III) showing a melt flow rate (MFR) of at least 3 g/10 min at 230°C measured under a load of 37.3 N, and

(IV) showing a molecular weight distribution (Mw/Mn) of 2.2 to 3.8 calculated from a weight average molecular weight (Mw) and a number average molecular weight (Mn) both measured by gel permeation chromatography (GPC).

The above-described (I) recites composition of the methacrylic resin composition of the present invention. More concretely, the monomeric components composing the above-described copolymer comprise methyl methacrylate and acrylic acid ester.

Examples of the above-described acrylic acid ester include methyl acrylate, ethyl acrylate, propyl acrylate, n-butyl acrylate, sec-butyl acrylate, tert-butyl acrylate, cyclohexyl acrylate, benzyl acrylate, 2-ethylhexyl acrylate, 2-hydroxyethyl acrylate, cyclopentadienyl acrylate, and so on. Among them, methyl acrylate and ethyl acrylate are preferred. These may be used alone or in combination of at least two of them.

The content ratio of methyl methacrylate in the above-described monomeric components is at least 97% by weight, preferably 97 to 99.9% by weight, more preferably 97 to 99% by weight.

A content ratio of acrylic acid ester in the above-described monomeric components results in 3% by weight or less, but is preferably at least 0.1% by weight, and more preferably at least 1% by weight, and still more preferably 1 to 2.98% by weight. The content ratio of acrylic acid ester of 0.1% by weight or more is preferable since the generated copolymer is effectively prevented from being decomposed easily, so that high heat stability during molding can be obtained. The content ratio of acrylic acid ester of 3% by weight or less is preferable since high heat resistance of the obtained vehicle member can be attained.

The above-described monomeric components may comprise, in addition to methyl methacrylate and acrylic acid ester, other monomer(s) which is copolymerizable with methyl methacrylate or acrylic acid ester. As such other monomer, a monofunctional monomer having one radical-polymerizable double bond and a polyfunctional monomer having at least two radical-polymerizable double bonds are mentioned, exemplarily. These may be used alone or in combination of at least two of them.

Examples of the above-described monofunctional monomer having one radical-polymerizable double bond are methacrylic acid ester such as ethyl methacrylate, propyl methacrylate, n-butyl methacrylate, sec-butyl methacrylate, tert-butyl methacrylate, 2-ethylhexyl methacrylate, cyclohexyl methacrylate, benzyl methacrylate, cyclopentadienyl methacrylate; unsaturated carboxylic acid or acid anhydride thereof, such as acrylic acid, methacrylic acid, maleic acid, itaconic acid, maleic acid anhydride, itaconic acid anhydride; a nitrogen-containing monomer such as acrylamide, methacrylamide, acrylonitrile, methacrylonitrile; a styrene based monomer such as styrene, α -methylstyrene; and so on. These may be used alone or in combination of at least two of them.

Examples of the above-described polyfunctional monomer having at least two radical-polymerizable double bonds are unsaturated carboxylic acid diester of glycol such as ethylene glycol dimethacrylate, butanediol dimethacrylate; alkenyl ester of unsaturated carboxylic acid such as allyl acrylate, allyl methacrylate, allyl cinnamate; polyalkenyl ester of polybasic acid such as diallyl phthalate, diallyl maleate, triallyl cyanurate, triallyl isocyanurate; unsaturated carboxylic acid ester of polyalcohol such as trimethylolpropane triacrylate; divinylbenzene; and so on. These may be used alone or in combination of at least two of them.

Especially, the above- described monomeric components preferably comprise the above- described polyfunctional monomer having at least two radical- polymerizable double bonds at a ratio of 0.02 to 0.3 parts by weight, more preferably at a ratio of 0.05 to 0.15 parts by weight, on the basis of 100 parts by weight in total of methyl methacrylate and acrylic acid ester. Thereby, it becomes possible to adjust the molecular weight distribution (Mw/Mn) which is calculated from the weight average molecular weight (Mw) and the number average molecular weight (Mn) both measured by GPC for the methacrylic resin composition in the above- described (IV) . That is, the molecular weight distribution (Mw/Mn) can be made smaller by decreasing the ratio of the above- described polyfunctional monomer, and the molecular weight distribution (Mw/Mn) can be made larger by increasing the ratio of the above- described polyfunctional monomer.

As to a polymerization method for copolymerize the above-described monomeric components, various polymerization methods known in the art such as suspension polymerization, solution polymerization and bulk polymerization can be used. Among them, bulk polymerization is preferably used. The bulk polymerization can be conducted by, for example, continuously supplying the monomeric components, a polymerization initiator and so on into a reactor while continuously taking out a reaction mixture containing a copolymer after a certain residence time in the reactor, and therefore it is possible to obtain the copolymer with a high productivity.

For copolymerizing the above- described monomeric components, a polymerization initiator is used. A polymerization initiator is not particularly limited, and any of radical polymerization initiators known in the art, for example, an azo compound such as azobisisobutyronitrile, a peroxide such as 1, 1- di (t- butylperoxy) cyclohexane, and so on can be used. The polymerization initiator may be used alone or in combination of at least two of them. A content ratio of a polymerization initiator, depending on a kind of an initiator, a polymerization temperature and a residence time in reactor, is generally 0.002 to 0.06 parts by weight, preferably 0.005 to 0.05 parts by weight, more preferably 0.01 to 0.04 parts by weight, on the basis of 100 parts by weight in total of methyl methacrylate and acrylic acid ester.

For copolymerizing the above-described monomeric components, a chain transfer agent may be used, if necessary. A chain transfer agent is not particularly limited, but preferable examples thereof are mercaptans such as n-butylmercaptan, n-octylmercaptan, n-dodecylmercaptan, 2-ethylhexyl thioglycolate, and so on. These may be used alone or in combination of at least two of them. A content ratio of a chain transfer agent, depending on a kind of a chain transfer agent, a polymerization temperature and a residence time in reactor, is generally 0.008 to 0.40 parts by weight, preferably 0.21 to 0.35 parts by weight, more preferably 0.28 to 0.32 parts by weight, on the basis of 100 parts by weight in total of methyl methacrylate and acrylic acid ester.

A polymerization temperature for copolymerizing the above-described monomeric components is adjusted adequately depending on, for example, a kind and an amount of the radical polymerization initiator used, but generally 100° to 200°C, and preferably 120° to 180°C. The polymerization temperature in such range is preferable, since it tends to provide the generated copolymer with high syndiotacticity, and thus provide the obtained vehicle member with sufficient heat resistance, and since it is possible to obtain the generated copolymer with sufficient conversion, so that a high productivity can be achieved.

The above-described methacrylic resin composition preferably comprises, together with the above-described copolymer, a heat stabilizing agent for suppressing thermal decomposition of the copolymer. A content ratio of the heat stabilizing agent is preferably 1 to 2000 ppm by weight, more preferably 1 to 1000 ppm by weight, and still more preferably 1 to 100 ppm by weight with respect to the total amount of the methacrylic resin composition. When the above-described methacrylic resin composition is subjected to injection molding so as to mold it into a thin thickness vehicle member as desired, a temperature of molding is set at a higher temperature for the purpose of increasing a molding efficiency in some cases, and addition of the heat stabilizing agent in these cases contributes to such effect.

As to the above-described heat stabilizing agent, there are no specific limitations, but a phosphorus heat stabilizing agent and an organic disulfide compound are mentioned, exemplarily. Among them, the organic disulfide compound is preferred. These may be used alone or in combination of at least two of them.

As the above- described phosphorus heat stabilizing agent, examples are tris (2, 4- di- t- butylphenyl) phosphite, 2- [[2, 4, 8, 10- tetrakis (1, 1- dimethylethyl) dibenzo [d, f] [1, 3, 2] dioxaphosphepine- 6- yl] oxy]- N, N- bis [2- [[2, 4, 8, 10- tetrakis (1, 1- dimethylethyl) dibenzo [d, f] [1, 3, 2] dioxaphosphepine- 6- yl] oxy]- ethyl] ethanamine, diphenyl tridecyl phosphite, triphenyl phosphite, 2, 2- methylenebis (4, 6- di- tert- butylphenyl) octylphosphite, bis (2, 6- di- tert- butyl- 4- methylphenyl) pentaerythritol diphosphite, and so on. These may be used alone or in combination of at least two of them. Among them, 2, 2- methylenebis (4, 6- di- tert- butylphenyl) octylphosphite is preferred.

As the above-described organic disulfide compound, examples are dimethyl disulfide, diethyl disulfide, di-n-propyl disulfide, di-n-butyl disulfide, di-sec-butyl disulfide, di-tert-butyl disulfide, di-tert-amyl disulfide, dicyclohexyl disulfide, di-tert-octyl disulfide, di-n-dodecyl disulfide, di-tert-dodecyl disulfide, and so on. These may be used alone or in combination of at least two of them. Among them, di-tert-alkyl disulfide is preferred, and di-tert-dodecyl disulfide is more preferred.

The above-described methacrylic resin composition may comprise, in addition to the heat stabilizing agent, various additives such as a mold release agent, an ultraviolet absorbing agent, a light diffusing agent, an antioxidizing agent, an antistatic agent, and so on, if necessary, as long as the present invention does not lose its effects.

When the above-described methacrylic resin composition comprises the various additives such as the heat stabilizing agent as describe above, these additives can be incorporated in the methacrylic resin composition by a method, for example, a method (a) wherein the copolymer obtained from polymerization of the above-described monomeric components and the additives are mixed with each other by heat-melt mixing in, for example, a single screw extruder or a twin screw extruder; a method (b) wherein the above-described monomeric components and the additives are mixed with each other, and the resultant mixture is subjected to a polymerization reaction to polymerize; a method (c) wherein the additives adhere to a surface of pellets or beads made of the copolymer described in the above (a), and the additives are mixed with the copolymer at the same time as molding.

On the other hand, the above-described (II) recites the reduced viscosity of the methacrylic resin composition of the present invention. That is, the methacrylic resin composition of the present invention shows the reduced viscosity of 55 to 65 $cm^3/g$, and preferably 58 to 62 $cm^3/g$ at 25°C when it is measured in the form of a chloroform solution at a concentration of 0.01 $g/cm^3$.

If the above-described reduced viscosity is too small, the obtained vehicle member shows low chemical resistance and mechanical strength, although molding processability is improved. If the above-described reduced viscosity is too large, molding processability becomes inferior, and it becomes difficult to mold a thin thickness vehicle member. However, the reduced viscosity in the above-described range can attain suitable chemical resistance, mechanical strength and molding processability for preparing a thin thickness vehicle member. The reduced viscosity can be within the above-described range by, for example, adjusting an amount of the chain transfer agent which is used for polymerization of the above-described monomeric components. The reduced viscosity tends to be decreased by increasing the amount of the chain transfer agent.

The above-described (III) recites the MFR of the methacrylic resin composition of the present invention. That is, the methacrylic resin composition of the present invention shows the MFR of at least 3 g/10 min, preferably 3 to 9 g/10 min, and more preferably 3 to 7 g/10 min at 230°C which is measured under a load of 37.3 N

If the above-described reduced MFR is too small, molding processability becomes inferior, and it becomes difficult to mold a thin thickness vehicle member. However, the MFR in the above-described range can attain suitable molding processability for preparing a thin thickness vehicle member. The MFR depends on the reduced viscosity, the composition of the above-described monomeric components, the polymerization temperature for copolymerizing the monomeric components, and so on. The MFR can be within the above-described range by, for example, adjusting the reduced viscosity and/or the composition of the above-described monomeric components while setting a certain polymerization temperature. The MFR tends to be increased by setting the reduced viscosity at a lower value, by increasing the content ratio of acrylic acid ester in the monomeric components, or increasing the content ratio of the polyfunctional monomer in the monomeric components.

The above-described (IV) recites the molecular weight distribution of the methacrylic resin composition of the present invention. That is, the methacrylic resin composition of the present invention shows the molecular weight distribution (Mw/Mn) of 2.2 to 3.8, and preferably 2.2 to 3.5, which is calculated from the weight average molecular weight (Mw) and the number average molecular weight (Mn) both measured by GPC.

The molecular weight distribution (Mw/Mn) not less than 2.2 can improve molding processability and improve chemical resistance of the obtained vehicle member. The molecular weight distribution (Mw/Mn) not more than 3.8 can brings about good mechanical strength of the obtained vehicle member. The molecular weight distribution (Mw/Mn) can be within the above-described range by, for example, adjusting polymerization conditions such as the composition of the above-described monomeric components. The above-described weight average molecular weight (Mw) is appropriately from 96,000 to 115,000, and the above-described number average molecular weight (Mn) is appropriately from 30,000 to 50,000. In a case of the above-described weight average molecular weight (Mw) of 96,000 or more, the obtained vehicle member shows sufficient chemical resistance. In a case of the above-described weight average molecular weight (Mw) of 115,000 or less, suitable molding processability can be obtained. In a case of the above-described number average molecular weight (Mn) of 30,000 or more, the obtained vehicle member shows sufficient mechanical strength.

Since the methacrylic resin composition of the present invention shows high flowability on molding and good chemical resistance, it can be preferably used as a molding material for a vehicle member. Specifically, the methacrylic resin composition of the present invention can be preferably used as a molding material for molding a thin thickness vehicle member which has a thickness of about 1 to 2 mm, and can be preferably used as a molding material subjected to injection molding.

The vehicle member of the present invention is obtained by subjecting the above-described methacrylic resin composition of the present invention to injection molding. For example, it is preferably at least one selected from the group consisting of a rear lamp cover, a head lamp cover, a visor and a meter panel. Such vehicle member can be obtained by using the above-described methacrylic resin composition as a molding material, filling a mold (e.g. metal mold) having a certain thickness with the molding material in a molten state (by injection), cooling it, and then releasing a molded article from the mold.

More concretely, the above-described vehicle member can be obtained by supplying the above-described methacrylic resin composition to a cylinder from, for example, a hopper, moving a screw backwardly while rotating it to measure the methacrylic resin composition in the cylinder, melting the methacrylic resin composition, filling a mold (e.g. metal mold) with the molten methacrylic resin composition under pressure, retaining them for a certain time period until the mold is sufficiently cooled, and then opening the mold to take out the molded article.

As to various conditions for preparing the above-described vehicle member such as a temperature for molding the molding material, a temperature of the mold on injecting the molding material into the mold, a pressure at which the methacrylic resin composition filled in the mold is retained for pressure keeping, they can be set appropriately and are not particularly limited.

Examples

The present invention is explained in more detail by examples below, although the present invention is not limited to the following examples only. In the following examples, units expressed by "%" and "parts" for a content and/or usage are based on weight (wt) unless otherwise specified.

Example 1

<Preparation of Methacrylic resin composition>

Firstly, 98% of methyl methacrylate and 2% of methyl acrylate were mixed together to obtain a mixture thereof. This mixture was further mixed with ethylene glycol dimethacrylate at a ratio of 0.1 parts on the basis of 100 parts by weight in total of methyl methacrylate and methyl acrylate to obtain monomeric components.

Next, the obtained monomeric components were polymerized by bulk polymerization. More concretely, a polymerization reactor equipped with a stirrer was supplied respectively and continuously with the above- described monomeric components, 0.03 parts of 1, 1- di (t- butylperoxy) cyclohexane as a polymerization initiator, 0.30 parts of n-octylmercaptan as a chain transfer agent, di- tert- dodecyl disulfide as a thermal stabilizing agent at an amount which corresponded to about 20 ppm by weight with respect to the total amount of the monomeric components. The polymerization reaction was conducted at 175°C with an average residence time of 30 min, and a reaction mixture (a partially copolymerized material) was continuously taken out of the polymerization reactor. Note that the ratios of the polymerization initiator and the chain transfer agent were both on the basis of 100 parts in total of methyl methacrylate and methyl acrylate.

The reaction mixture taken out of the polymerization reactor was continuously supplied to a devolatilizing extruder. While unreacted monomeric components were recovered by vaporization, the methacrylic resin composition in the form of pellets was obtained.

<Evaluation>

With respect to the obtained methacrylic resin composition, a reduced viscosity, an MFR, GPC, molding processability, chemical resistance, heat resistance and mechanical strength were measured and/or evaluated. Each of the evaluating methods and the measuring methods are explained below, and results thereof are shown in Table 1.

(Measuring method of Reduced viscosity)

Pursuant to ISO 1628-6, 0.5 g of the obtained methacrylic resin composition in the form of pellets was dissolved into chloroform so as to form a solution of 50 $cm^3$, and its reduced viscosity was measured at 25°C with the use of Cannon-Fenske viscometer.

(Measuring method of MFR)

Pursuant to JIS K7210, measurement was conducted at 230°C under a load of 37.3 N.

(Measuring method of GPC)

A measurement sample was prepared by dissolving 40 mg of the obtained methacrylic resin composition in the form of pellets into 20 mL of a tetrahydrofuran (THF) solvent. A measuring apparatus used was assembled by installing two columns of "TSKgel SuperHM-H" and one column of "Super H2500" in series, both of which were manufactured by Tosoh Corporation, Japan, into a GPC apparatus manufactured by Tosoh Corporation, and applying as a detector an RI (Refractive Index) detector.

With the use of this measuring apparatus, an elution time and an intensity were measured while setting an injection amount of the measurement sample at 20 µL and a flow rate at 0.6 mL/min. Then, a weight average molecular weight (Mw) and a number average molecular weight (Mn) of the measurement sample were measured based on a calibration curve which has been obtained from seven kinds of methacrylic resin compositions having monodispersity with known and different molecular weights, manufactured by  Showa Denko K.K., Japan. A molecular weight distribution (Mw/Mn) was calculated from these values.

(Evaluating method of Molding processability)

With the use of an injection molding machine ("150D Model" manufactured by FANUC CORPORATION, Japan), the methacrylic resin composition was injected into two kinds of circular spiral metal molds having different thickness from a center position of respective metal molds. A distance (mm) reached by the methacrylic resin composition in respective metal molds was measured (spiral flow length). The reached distance was determined by reading a scale which was transferred from the metal molds onto the injection molded articles. It is understood that the longer the reached distance is, the better the molding processability is. The injection conditions and the used circular metal molds were as follows.

Temperature of Molding: 260°C
Temperature of Metal mold: 60°C
Injection rate: 80 mm/sec
Injection pressure: 75 MPa
Circular spiral metal mold (A): a circular spiral metal mold having a thickness of 2 mm and a width of 10 mm was used.
Circular spiral metal mold (B): a circular spiral  metal mold having a thickness of 1 mm and a width of 10 mm was used.

(Evaluating method of Chemical resistance)

Firstly, with the use of an injection molding machine ("140T Model" manufactured by MEIKI CO., LTD, Japan), the methacrylic resin composition was injected to obtain a flat plate having a length of 250 mm, a width of 25.4 mm and a thickness of 3 mm. The injection conditions were as follows.
Temperature of Molding: 250°C
Temperature of Metal mold: 60°C
Then, the obtained flat plate was dried in a vacuum dryer for five hours followed by being placed in a desiccator to obtain a specimen.
The obtained specimen was used to conduct a chemical resistance test. The test was conducted in a constant temperature and humidity room of 23°C and 40% RH (Relative Humidity). The method of the test applied a cantilever method and procedures of the following (a) to (d):

(a) supporting the specimen by sandwiching its one end with a fixed base and supporting the specimen from its lower side at a position (fulcrum point) of 146 mm distant from the fixed position to keep the specimen horizontally;
(b) applying a load onto the other end of the specimen  to generate a certain surface stress in the specimen;
(c) applying ethanol ("reagent first grade ethanol" manufactured by Wako Pure Chemical Industries, Ltd., Japan) on the upper side of the specimen, and periodically applying ethanol so as to avoid ethanol from volatilizing and being disappeared; and
(d) determine a time period (sec) from the start of applying ethanol until appearing of craze on the specimen.

According to this method, the craze appearance time was determined under a surface stress of 10 MPa to evaluate chemical resistance. It is understood that the longer the craze appearance time is, the better the chemical resistance is.

The load required for the certain surface stress was calculated by the following equation (i):

$$\text{Surface Stress (MPa)} = [(6 \times A \times B)/(C \times D^2)] \times 10^{-6} \cdots (i)$$

A: Load (N)
B: Distance from Fulcrum point to Application point of Load (m)
C: Width of Specimen (m)
D: Thickness of Specimen (m)

(Evaluating method of Heat resistance)

Pursuant to JIS K7206 (B50 Method), a Vicat softening temperature was determined with the use of a heat distortion tester ("148-6 parallel Model" manufactured by YASUDA SEIKI SEISAKUSHO, LTD., Japan). It is understood that the higher the Vicat softening temperature is, the better the heat resistance is.

(Evaluating method of Mechanical strength)

Pursuant to JIS K7162, a 1A specimen was prepared by injection molding, and subjected to a test with a velocity of 5 mm/min to calculate a tensile fracture stress (MPa). It is understood that the higher the tensile fracture stress is, the better the mechanical strength.

Comparative Example 1

Firstly, monomeric components were prepared according to similar procedures to the above- described Example 1, except for that a ratio of methyl methacrylate was changed from 98% to 97%, a ratio of methyl acrylate was changed from 2% to 3%, and ethylene glycol dimethacrylate was not added.

Next, the monomeric components were polymerized by bulk polymerization to obtain a methacrylic resin composition in the form of pellets according to similar procedures to the above- described Example 1, except for that a ratio of 1, 1- di (t- butylperoxy) cyclohexane used as the polymerization initiator was changed from 0.03 parts to 0.02 parts, a ratio of n- octylmercaptan used as the chain transfer agent was changed from 0.30 parts to 0.20 parts.

With respect to the obtained methacrylic resin composition, a reduced viscosity, an MFR, GPC, molding processability, chemical resistance, heat resistance and mechanical strength were measured and/or evaluated according to similar procedures to the above-described Example 1. Results thereof are shown in Table 1.

Comparative Example 2

Firstly, monomeric components were prepared according to similar procedures to the above- described Example 1. Next, the monomeric components were polymerized by bulk polymerization to obtain a methacrylic resin composition in the form of pellets according to similar procedures to the above- described Example 1, except for that a ratio of 1, 1- di (t- butylperoxy) cyclohexane used as the polymerization initiator was changed from 0.03 parts to 0.02 parts, a ratio of n- octylmercaptan used as the chain transfer agent was changed from 0.30 parts to 0.40 parts.

With respect to the obtained methacrylic resin composition, a reduced viscosity, an MFR, GPC, molding processability, chemical resistance, heat resistance and mechanical strength were measured and/or evaluated according to similar procedures to the above-described

Example 1. Results thereof are shown in Table 1.

Comparative Example 3

Firstly, monomeric components were prepared according to similar procedures to the above- described Example 1, except for that a ratio of methyl methacrylate was changed from 98% to 95%, a ratio of methyl acrylate was changed from 2% to 5%, and ethylene glycol dimethacrylate was not added.

Next, the monomeric components were polymerized by bulk polymerization to obtain a methacrylic resin composition in the form of pellets according to similar procedures to the above- described Example 1, except for that a ratio of 1, 1- di (t- butylperoxy) cyclohexane used as the polymerization initiator was changed from 0.03 parts to 0.02 parts, a ratio of n- octylmercaptan used as the chain transfer agent was changed from 0.30 parts to 0.20 parts.

With respect to the obtained methacrylic resin composition, a reduced viscosity, an MFR, GPC, molding processability, chemical resistance, heat resistance and mechanical strength were measured and/or evaluated according to similar procedures to the above-described Example 1. Results thereof are shown in Table 1.

Table 1

| | | | Example 1 | Comparative Example 1 | Comparative Example 2 | Comparative Example 3 |
|---|---|---|---|---|---|---|
| Monomeric components | methyl methacrylate | (wt%) | 98 | 97 | 98 | 95 |
| | methyl acrylate | (wt%) | 2 | 3 | 2 | 5 |
| | ethylene glycol dimethacrylate | (parts by wt) | 0.1 | 0 | 0.1 | 0 |
| Polymerisation initiator | | (parts by wt) | 0.03 | 0.02 | 0.02 | 0.02 |
| Chain transfer agent | | (parts by wt) | 0.30 | 0.20 | 0.40 | 0.20 |
| Reduced viscosity | | ($cm^3/g$) | 60 | 70 | 51 | 65 |
| MFR | | (g/10 min) | 5 | 2 | 10 | 5 |
| GPC | Mw | (-) | 100,000 | 110,000 | 84,000 | 108,000 |
| | Mn | (-) | 43,000 | 58,000 | 38,000 | 54,000 |
| | Mw/Mn | (-) | 2.3 | 1.9 | 2.2 | 2.0 |
| Molding processabili ty | Spiral flow length: 2 mm thickness (Circular spiral metal mold (A)) | (mm) | 370 | 280 | 415 | 370 |
| | Spiral flow length: 1 mm thickness (Circular spiral metal mold (B)) | (mm) | 150 | 110 | 170 | 140 |
| Chemical resistance | Craze appearance time under surface stress of 10 MPa | (sec) | 120 | 100 | 40 | 100 |
| Heat resistance | Vicat softening temperature (B50 Method) | (°C) | 110 | 108 | 109 | 105 |
| Mechanical Strength | Tensile fracture stress | (MPa) | 65 | 79 | 60 | 70 |

As apparent from Table 1, it is understood that Example 1 showed good results in molding processability and chemical resistance. In contrast, Comparative Example 1 of which reduced viscosity was higher than the prescribed value and of which MFR and molecular weight distribution (Mw/Mn) were lower than the respectively prescribed values showed inferior results in molding processability and chemical resistance. Comparative Example 2 of which reduced viscosity was lower than the prescribed value showed a good result in molding processability, but showed an extremely inferior result in chemical resistance and an inferior result in mechanical strength. Comparative Example 3 of which content ratio of methyl methacrylate was lower than the prescribed value and of which molecular weight distribution (Mw/Mn) was lower than the prescribed value showed good result in molding processability, but showed inferior results in chemical resistance and heat resistance.

The present application claims priority to Japanese Patent Application No. 2010-262278 filed on November 25, 2010, entitled "METHACRYLIC RESIN COMPOSITION FOR VEHICLE MEMBER." The contents of that application are incorporated herein by the reference thereto in their entirety.

**Claims**

1. A methacrylic resin composition for a vehicle member, **characterized by**

   (I) comprising a copolymer polymerized from monomeric components comprising methyl methacrylate and acrylic acid ester wherein a content ratio of methyl methacrylate is at least 97% by weight,
   (II) showing a reduced viscosity of 55 to 65 $cm^3$/g at 25°C measured in a form of a chloroform solution at a concentration of 0.01 g/$cm^3$,
   (III) showing a melt flow rate (MFR) of at least 3 g/10 min at 230°C measured under a load of 37.3 N, and
   (IV) showing a molecular weight distribution (Mw/Mn) of 2.2 to 3.8 calculated from a weight average molecular weight (MW) and a number average molecular weight (Mn) both measured by gel permeation chromatography (GPC).

2. The methacrylic resin composition for a vehicle member according to claim 1, wherein a content ratio of acrylic acid ester in the monomeric components is at least 0.1% by weight.

3. The methacrylic resin composition for a vehicle member according to claim 1 or 2, wherein the monomeric components comprise 0.02 to 0.3 parts by weight of a polyfunctional monomer having at least two radicalpolymerizable double bonds, on the basis of 100 parts by weight in total of methyl methacrylate and acrylic acid ester.

4. The methacrylic resin composition for a vehicle member according to any of claims 1 to 3, wherein polymerization of the monomeric components is conducted by bulk polymerization.

5. The methacrylic resin composition for a vehicle member according to any one of claims 1 to 4, which is to be subjected to injection molding.

6. A vehicle member which is obtained by subjecting the methacrylic resin composition according to any one of claims 1 to 5 to injection molding.

7. The vehicle member according to claim 6, which is at least one selected from a group consisting of a rear lamp cover, a head lamp cover, a visor and a meter panel.

**Patentansprüche**

1. Eine Methacrylharzzusammensetzung für ein Fahrzeugelement, **dadurch gekennzeichnet, dass**

   (I) sie ein Copolymer umfasst, welches aus monomeren Bestandteilen, umfassend Methylmethacrylat und Acrylsäureester, polymerisiert ist, wobei ein Gehaltsanteil von Methylmethacrylat mindestens 97 Gew.-% beträgt,
   (II) sie eine reduzierte Viskosität von 55 bis 65 $cm^3$/g bei 25°C aufweist, gemessen in Form einer Chloroformlösung mit einer Konzentration von 0,01 g/$cm^3$,
   (III) sie einen Schmelzflussindex (MFR) von mindestens 3 g/10 min bei 230°C aufweist, gemessen unter einer Last von 37,3 N, und
   (IV) sie eine Molekulargewichtsverteilung (Mw/Mn) von 2,2 bis 3,8 aufweist, berechnet aus einem Gewichtsmittel des Molekulargewichts (Mw) und einem Zahlenmittel des Molekulargewichts (Mn), beide gemessen durch Gelpermeationschromatographie (GPC).

2. Die Methacrylharzzusammensetzung für ein Fahrzeugelement nach Anspruch 1, wobei ein Gehaltsanteil des Acrylsäureesters in den monomeren Bestandteilen mindestens 0,1 Gew.-% beträgt.

3. Die Methacrylharzzusammensetzung für ein Fahrzeugelement nach Anspruch 1 oder 2, wobei die monomeren Bestandteile 0,02 bis 0,3 Gewichtsteile eines polyfunktionellen Monomers mit mindestens zwei radikalisch polymerisierbaren Doppelbindungen, bezogen auf 100 Gewichtsteile des gesamten Methylmethacrylats und Acrylsäureesters, umfassen.

4. Die Methacrylharzzusammensetzung für ein Fahrzeugelement nach einem der Ansprüche 1 bis 3, wobei die Polymerisation der monomeren Bestandteile als Massenpolymerisation durchgeführt wird.

5. Die Methacrylharzzusammensetzung für ein Fahrzeugelement nach einem der Ansprüche 1 bis 4, welche Spritzgießen unterzogen werden soll.

6. Ein Fahrzeugelement, welches durch Spritzgießen der Methacrylharzzusammensetzung nach einem der Ansprüche 1 bis 5 erhalten wird.

7. Das Fahrzeugelement nach Anspruch 6, welches mindestens eines, ausgewählt aus einer Gruppe bestehend aus einer Rückleuchtenabdeckung, einer Frontleuchtenabdeckung, einem Blendschutz und einer Instrumententafel, ist.

**Revendications**

1. Composition de résine méthacrylique pour un élément de véhicule, **caractérisée en ce que**

(I) elle comprend un copolymère polymérisé à partir de constituants monomères comprenant du méthacrylate de méthyle et un ester d'acide acrylique dans laquelle un rapport de teneur du méthacrylate de méthyle est d'au moins 97 % en masse,
(II) elle présente une viscosité réduite de 55 à 65 cm$^3$/g à 25°C mesurée dans une forme d'une solution dans du chloroforme à une concentration de 0,01 g/cm$^3$,
(III) elle présente un indice de fusion (MFR) d'au moins 3 g/10 min à 230°C mesuré sous une charge de 37,3 N, et
(IV) elle présente une distribution de masse moléculaire (Mw/Mn) de 2,2 à 3,8 calculée à partir d'une masse moléculaire moyenne en masse (MW) et d'une masse moléculaire moyenne en nombre (Mn) toutes deux mesurées par chromatographie par perméation sur gel (GPC).

2. Composition de résine méthacrylique pour un élément de véhicule selon la revendication 1, dans laquelle un rapport de teneur de l'ester d'acide acrylique dans les constituants monomères est d'au moins 0,1 % en masse.

3. Composition de résine méthacrylique pour un élément de véhicule selon la revendication 1 ou 2, dans laquelle les constituants monomères comprennent de 0,02 à 0,3 partie en masse d'un monomère polyfonctionnel présentant au moins deux doubles liaisons radicalpolymérisables, sur la base de 100 parties en masse du total de méthacrylate de méthyle et d'ester d'acide acrylique.

4. Composition de résine méthacrylique pour un élément de véhicule selon l'une quelconque des revendications 1 à 3, dans laquelle une polymérisation des constituants monomères est réalisée par une polymérisation en masse.

5. Composition de résine méthacrylique pour un élément de véhicule selon l'une quelconque des revendications 1 à 4, laquelle est à soumettre à un moulage par injection.

6. Elément de véhicule, lequel est obtenu en soumettant la composition de résine méthacrylique selon l'une quelconque des revendications 1 à 5 à un moulage par injection.

7. Elément de véhicule selon la revendication 6, lequel est au moins un choisi dans un groupe constitué d'une couverture de feu arrière, d'une couverture de feu avant, d'une visière et d'un panneau de mesure.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8302145 A
- JP 2003105158 A
- JP 11140265 A
- JP 2003292714 A
- JP 2006193647 A
- JP 2004139839 A
- JP 2010262278 A